# EUROPEAN PATENT SPECIFICATION

(11) **EP 3 969 265 B1**
(45) Date of publication and mention of the grant of the patent: **12.07.2023**
(21) Application number: 20727181.8
(22) Date of filing: 13.05.2020
(51) Int. Cl.: B29K 105/00, B29C 65/16, B29C 65/00, C08G 69/14, C08K 5/00, C08K 5/23, C08L 77/02, C08L 77/06, C08L 77/10, B29C 65/82, C08G 69/36

(54) **BLACK-COLOURED POLYAMIDE COMPOSITION WITH HIGH LASER TRANSMITTANCE FOR LASER WELDING APPLICATION**
SCHWARZ GEFÄRBTE POLYAMIDZUSAMMENSETZUNG MIT HOHER LASERDURCHLÄSSIGKEIT FÜR LASERSCHWEISSANWENDUNGEN
COMPOSITION DE POLYAMIDE COLORÉE NOIRE À FACTEUR DE TRANSMISSION LASER ÉLEVÉ POUR APPLICATION DE SOUDAGE AU LASER

(30) Priority: 14.05.2019 WO PCT/CN2019/086865
(43) Date of publication of application: 23.03.2022
(73) Proprietor: BASF SE, 67056 Ludwigshafen am Rhein (DE)
(72) Inventor: WANG, Huanbing, Shanghai, 201108 (CN)
(74) Representative: BASF IP Association
(86) International application number: PCT/EP2020/063354
(87) International publication number: WO 2020/229551

(56) References cited:
- WO-A1-2018/138256
- US-A1- 2019 031 857

## Description

The invention relates to a polyamide composition giving molded parts which exhibit high laser transmittance in the preparation of articles using the laser welding technique, while maintaining satisfactory mechanical properties. The articles may be used in particular automotive applications, for example filter housings, resonators, exhaust control valves, door lock parts and display components.

### PRIOR ART

As a tool for jointing plastics, the laser is still relatively new, but this industrial application is likely to become as well established as laser marking and laser cutting. Materials welded to date using lasers have mainly been plastic films, and the process has only recently been extended to the jointing of three-dimensional components for the mass-production of parts.

The process technology for laser welding of thermoplastics has many advantages when compared with traditional welding methods, such as heated tool welding, vibration welding or ultrasonic welding:
- no production of dust
- good aesthetic results, no visible scars
- no mechanical stress on the joint components
- small amounts of heat applied to a limited area
- parts with different stiffness are weldable
- contactless (no melt tack, no markings on components)
- repair welds possible
- materials of different viscosities can be welded

In laser welding two plastics are normally combined with one another by bonding an upper plastic translucent to laser light with a lower plastic not translucent to laser light. The laser beam here passes through the upper layer of plastic leaving it unchanged and encounters the lower layer, by which it is absorbed with liberation of thermal energy. The thermal energy liberated melts the plastic material and thus bonds it to the upper layer at the point of impact of the laser beam.

A disadvantage of this method, however, is that it is not possible to process plastic compositions coloured with absorbing dyes or pigments or comprising absorbing fillers, since the filler or dye or, respectively, the pigment used for coloration always immediately absorbs the laser light so that no bond is produced.

In many applications in the automotive industry, black-coloured thermoplastic material is required. However, even if colorants or pigments are present in only small amounts, laser welding performance significantly deteriorates. Carbon black and Nigrosine are the most commonly used black colorants in black-coloured material. However, carbon black shows high laser absorption at a wide range of wavelengths, even in small amounts. Nigrosine is better suited, but still cannot meet the requirements for a laser transparent component in laser welding applications. Therefore, improved black-coloured polyamide compositions for laser welding applications having high laser transmittance at 980 nm and 1064 nm, which are the two most commonly used laser wavelengths in laser welding, are still needed.

US 2002/0002225 A1 discloses a black thermoplastic molding composition which comprises a dye combination made from nonabsorbing, non-black polymer-soluble dyes which produce a black thermoplastic molding composition which is translucent or transparent to laser light. The dyes are chinophthalone or anthrachinone dyes.

US 2003/0039837 A1 discloses a fabricated resin product for laser welding comprising: a first laser beam transmitting resin part comprising laser-beam transmitting black colorant which absorbs visible light of wavelength of less than 700 nm and transmits a laser beam at wavelength in the range of 800 nm to 1200 nm, and a second laser beam absorbing resin part comprising laser-beam absorbing black colorant, wherein said first resin part is joined to said second resin part by a laser beam transmitted through said resin part and absorbed in said second resin part. According to certain embodiments, said laser beam transmitting black colorant is a monoazo complex dye.

An object of the present invention is to remedy the drawbacks mentioned above by providing a fibre filled polyamide material having satisfactory mechanical properties and improved laser transmittance at 980 nm and 1064 nm for the production of black-coloured laser transparent components for laser welding applications.

### INVENTION

The object is achieved by providing a polyamide composition, comprising
(i) at least one aliphatic polyamide or semi-aromatic polyamide or mixture thereof;
(ii) circular glass fibres;
(iii) flat glass fibres;
(iv) at least one black dye of the monoazo complex type;
(v) optionally one or more further additives.

It has surprisingly been found by the inventors that the laser transmittance at 980 nm and 1064 nm of the polyamide composition is significantly improved if a mixture of standard (circular) chopped glass fibres and flat glass fibres is used as a reinforcing filler instead of circular chopped glass fibres alone. At the same time, the mechanical properties of the polyamide composition are kept at a high level.

The components of the polyamide composition according to the invention are described in more detail in the following.

The inventive polyamide composition comprises (i) at least one aliphatic polyamide or semi-aromatic polyamide, preferably comprising repeating units derived from the polycondensation of hexamethylenediamine and adipic acid. The at least one aliphatic polyamide may optionally comprise further aliphatic repeating units derived from monomers which are copolymerizable with hexamethylenediamine and adipic acid.

Preferably, the at least one aliphatic polyamide has a number average molecular weight (Mn), determined by gel permeation chromatography (GPC) of 10,000 to 30,000 g/mol, in particular 12,000 to 24,000 g/mol.

Preferably, the aliphatic polyamide is selected from homopolymers of hexamethylenediamine and adipic acid (PA6.6), homopolymers of ε-caprolactam (PA6) or copolymers of hexamethylenediamine, adipic acid and ε-caprolactam (PA6.6/6) and mixtures or blends of these aliphatic polyamides. If the aliphatic polyamide is a copolymer comprising repeating units derived from ε-caprolactam, these repeating units are present in an amount of 1 to 30 mol.-%, preferably 5 to 20 mol-% and in particular 7 to 15 mol-%, based on the total weight of the at least one aliphatic polyamide. The remainder of the polyamide is then preferably composed of repeating units derived from hexamethylenediamine and adipic acid in a molar ratio of 1:1.

If the at least one aliphatic polyamide is selected from copolymers of hexamethylenediamine, adipic acid and ε-caprolactam (PA6.6/6), only the repeating units derived from hexamethylenediamine and adipic acid account to the amount of 40 to 70 wt.-%, preferably 45.0 to 67.5 wt.-%, of the at least one aliphatic polyamide based on the total weight of the polyamide composition.

The semi-aromatic polyamide preferably comprises repeating units derived from the polycondensation of hexamethylenediamine, adipic acid and at least one aromatic dicarboxylic acid.

In general, the semi-aromatic polyamide comprises repeating units derived from at least one aromatic dicarboxylic acid in an amount of at least 5 mol-%, based on the total weight of semi-aromatic polyamide. In a more preferred embodiment of the invention, the semi-aromatic polyamide comprises repeating units derived from at least one aromatic dicarboxylic acid in an amount of 5 to 50 mol-% and in particular 10 to 30 mol-%, based on the molar composition of the least one semi-aromatic polyamide.

The semi-aromatic polyamides are preferably obtained from polycondensation reactions of aliphatic diamines, aliphatic dicarboxylic acids, aromatic diamines and/or aromatic dicarboxylic acids. In a further preferred embodiment, the semi-aromatic polyamide may be obtained from the polycondensation of aliphatic diamines, aliphatic dicarboxylic acids and aromatic dicarboxylic acids.

Preferred aliphatic diamines include hexamethylene diamine and / or the 5-methyl pentamethylene diamine. In a particular preferred embodiment hexamethylene diamine is used.

In a particular preferred embodiment, adipic acid is used as aliphatic dicarboxylic acid.

In a preferred embodiment of the invention, the semi-aromatic polyamide comprises repeating units derived from aliphatic dicarboxylic acids, in particular derived from adipic acid, in amounts of from 0 mol-% to 90 mol-%, based on the total amount of repeating units derived from dicarboxylic acids, and more preferably from 40 mol-% to 80 mol-% of repeating units derived from dicarboxylic acids, whereas the remainder of the of repeating units derived from dicarboxylic acids is derived from aromatic dicarboxylic acids.

In a particular preferred embodiment, the at least one aromatic dicarboxylic acid is selected from terephthalic acid and isophthalic acid.

In a further preferred embodiment of the invention, the at least one repeating unit derived from at least one aromatic dicarboxylic acid is derived from terephthalic acid, optionally in combination with at least one further aromatic dicarboxylic acid, in particular in combination with isophthalic acid. Preferably, the the at least one repeating unit derived terephthalic acid is comprised in combination with at least one repeating unit derived from at least one aliphatic dicarboxylic acid, in particular adipic acid, and optionally further in combination with at least at least one repeating unit derived from at least one further aromatic dicarboxylic acid, in particular isophthalic acid.

In one particular preferred embodiment of the invention, the semi-aromatic polyamide comprises repeating units derived from
(a) terephthalic acid or isophthalic acid in an amount of from 10 to 60 mol-%, based on the total amount of repeating units derived from dicarboxylic acids, and
(b) adipic acid in an amount of from 40 to 90 mol-%, based on the total amount of repeating units derived from dicarboxylic acids;
wherein the total amount of terephthalic acid or isophthalic acid and adipic acid amounts up to 100 mol-% of the amount of repeating units derived from dicarboxylic acids.

In an alternative particular preferred embodiment of the invention, the semi-aromatic polyamide comprises repeating units derived from
(a) terephthalic acid in an amount of from 10 to 60 mol-%, based on the total amount of repeating units derived from dicarboxylic acids, and
(b) isophthalic acid in an amount of from 40 to 90 mol-%, based on the total amount of repeating units derived from dicarboxylic acid;
wherein the total amount of terephthalic acid and isophthalic acid amounts up to 100 mol-% of the amount of repeating units derived from dicarboxylic acids.

In a further alternative particular preferred embodiment of the invention, the semi-aromatic polyamide comprises repeating units derived from
(a) terephthalic acid and at least one further aromatic dicarboxylic acid in an amount of from 10 to 60 mol-%, based on the total amount of repeating units derived from dicarboxylic acids, and
(b) adipic acid in an amount of from 40 to 90 mol-%, based on the total amount of repeating units derived from dicarboxylic acids;
wherein the total amount of adipic acid, terephthalic acid and the at least one further aromatic dicarboxylic acid amounts up to 100 mol-% of the amount of repeating units derived from dicarboxylic acids, and wherein the terephthalic acid accounts for 10 to 60 mol-%, based on the total amount of repeating units derived from aromatic dicarboxylic acids, and the at least one further aromatic acid, in particular isophthalic acid, accounts for 40 to 90 mol-%, based on the total amount of repeating units derived from aromatic dicarboxylic acids.

Thus, in one preferred embodiment of the invention, the polyamide composition comprises at least one semi-aromatic polyamide selected from homopolymers and/or copolymers of hexamethylenediamine, adipic acid and terephthalic acid and/or isophthalic acid.

In one particular preferred embodiment of the invention, the at least one semi-aromatic polyamide is selected from copolymers of hexamethylenediamine, adipic acid and terephthalic acid (PA6.6/6.T), copolymers of hexamethylenediamine, adipic acid and isophthalic acid (PA6.6/6.I), copolymers of hexamethylenediamine, terephthalic acid and isophthalic acid (PA6.T/6.I) copolymers of hexamethylenediamine, adipic acid, terephthalic acid and isophthalic acid (PA6.6/6.T/6.I) and mixtures of these semi-aromatic polyamides.

Preferably, the at least one semi-aromatic polyamide has a number average molecular weight (Mn), determined by gel permeation chromatography (GPC) of 10,000 g/mol to 30,000 g/mol, in particular 12,000 g/mol to 24,000 g/mol.

The polyamides (i) are present in the polyamide composition in amounts of 50 to 78.88 wt.-%, based on the total weight of the polyamide composition.

The polyamide composition of the invention further comprises (ii) standard glass fibres. The glass fibres used can be chopped glass fibres or continuous glass fibres. If chopped glass fibres are used, the glass fibres preferably have a length between 1 mm and 8 mm. The standard glass fibres used have a circular cross section, as described for example in US 2007/0117910 or US 2014/0275367. The glass fibres preferably have a length between 1 mm and 5 mm and a diameter of between 5 µm and 20 µm, prior to the preparation of the polyamide composition by mixing the components (i) to (v). During the mixing and kneading with molten polymer, the fibres break and have an average length in the polyamide composition between 200 and 600 µm.

The polyamide composition of the invention further comprises (iii) flat glass fibres. In the present invention, the term "flat glass fibers" is intended to denote glass fibers having a non-circular cross section. Flat glass fibers suitable for being used as reinforcing filler in the composition of the present invention may have any non-circular cross section such as an elliptical section, oblong-circular section, rectangle section, a section in which half rounds are connected to both short sides of a rectangle, and cocoon section.

The aspect ratio (= major axis/minor axis) of said non-circular cross section of the flat glass fibers is advantageously from 1.0 to 10, preferably from 1.5 to 6.0, more preferably from 2.0 to 5.0, most preferably from 3.0 to 4.0.

The aspect ratio according to the present invention can be determined by analyzing an image obtained by observing a cross section of the flat glass fiber with a scanning electron microscope (SEM), and circumscribing the non- circular section of the flat glass fiber with a rectangle. The aspect ratio is obtained by calculating A (= length of Ra)/B (= length of Rb) wherein A and B are the length of a long side Ra and a short side Rb of a rectangle circumscribed to the flat glass fiber in the observed image.

The nature of glasses constituting the flat glass fibers of the composition of the present invention is not particularly limited and can include E glass, T glass, NE glass, C glass, S glass, S2 glass and R glass, and the like. Flat fibers may contain sizing agents on their surface in order to guarantee their cohesion when in continuous and chopped strand forms, and particularly to provide adhesion at the interface with the polyamide matrix.

Furthermore, the flat glass fibers of the present invention preferably have a length of the main cross-sectional axis in a range of 6 to 40 µm, in particular of 17 to 30 µm, more preferably of 24 to 28 µm. The length of the subsidiary cross-sectional axis is preferably in the range of 3 to 20 µm, in particle in the range of 4 to 10 µm. It is even more preferred that the length of the main cross-sectional axis is 7 or 8 µm.

The standard (circular) glass fibres (ii) are present in the polyamide composition in amounts of 20 to 50 wt.-%, more preferably 25 to 39 wt.-%, based on the total weight of the polyamide composition.

The flat glass fibres (iii) are present in the polyamide composition in amounts of 1 to 20 wt.-%, more preferably 1 to 15 wt.-%, particularly preferably 1 to 10 wt.-%, based on the total weight of the polyamide composition.

The polyamide composition of the invention comprises (iv) at least one black dye of the monoazo complex type. Monoazo complex dyes can be described by summarized by the following generic formula:

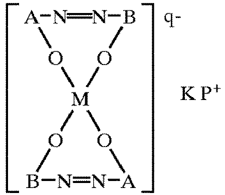

In the formula, A represents an aromatic residual group optionally having substituents, and B represents a naphthol derivatives residual group optionally having substituents. M is a metal, P⁺ is a cation, q is an integer 0-2, and K is an integer 0-2.

As the counter ions P⁺ of the aforementioned monoazo complex dyes, cations based on H⁺; NH₄⁺, alkali metals (Na, K, etc.), cations based on organic amines (primary fatty amines, secondary fatty amines, tertiary fatty amines); and quaternary organic ammonium ions can be used.

As the center metal M of the aforementioned monoazo complex dyes, various metals may be used. As the more preferred ones, metals having divalent to tetravalent atomic values can be used. As the specific examples, Zn, Sr, Cr, Cu, Al, Ti, Fe, Zr, Ni, Co, Mn, B, Si, and Sn can be used.

By changing the structure of the aforementioned monoazo complex dyes, various colours such as yellow, red, blue, violet, and black can be obtained. The aforementioned monoazo complex dyes have high heat resistance and light resistance, and the molding property and color tone for thermoplastic resins are excellent. For example, the monoazo complex dyes presented by the generic formula are obtained by carrying out metallization of A-N=N-B monoazo dyes. The A-N=N-B monoazo dyes are compounds obtained by carrying out diazotization on the A component and coupling on the B component. When pyrazolone derivatives or acetoacetanilide derivatives are used as B components, yellow-red monoazo complex dyes are obtained, and when naphthol derivatives are used as B components, blue-black monoazo complex dyes are obtained. Monoazo complex dyes using naphthols as the B components show high transmission properties near YAG laser. In other words, black colorants having excellent transmission in the entire region of near YAG laser (1000-1200 nm) can be obtained by using the aforementioned monoazo complex dyes alone or by mixing it with at least one dye with an absorption peak at a shorter wavelength while having good transmission in the range of 800-1200 nm. However, the ratio of incorporation for each dye is appropriately adjusted based on the color tone of the dye, the resin utilized and the concentration (or the thickness of the resin) utilized.

Specific examples of monoazo complex dyes are as follows. These are merely representative of a wider selection of dyes that may be used:
C.I. Solvent Black 21, 22, 23, 27, 28, 29, 31;
C.I. Acid Black 52, 60, 99;
Blue dye: C.I. Acid Blue 167;
Violet dye: C.I. Solvent Violet 21.

The at least one black dye of the monoazo complex type (iv) is present in the polyamide composition in amounts of 0.02 to 1 wt.-%, more preferably 0.05 to 0.5 wt.-%, based on the total weight of the polyamide composition.

The polyamide composition further comprises (v) one or more further additives including all additives commonly used in polyamide compositions. Preferably, the at least one additive is selected from heat stabilizers, mould release agents, flame retardants, toughening modifiers, and additives to facilitate the mixing of the components or the moulding of the composition. Particular preferred embodiments comprise heat stabilizers and mould release agents as additives. The heat stabilizer may be selected from copper salts, iron salts, phosphate stabilizers, aromatic amines and/or phenolic antioxidants.

The at least one additive is present in an amount of from 0.1 to 5 wt.-%, preferably from 0.1 to 2 wt.-%, and include mould release agents and heat stabilizers. In a further embodiment, the additives include heat stabilizers, mould release agents, flame retardants, toughening modifiers, and additives to facilitate the mixing of the components.

Thus, in one embodiment of the invention, the present invention relates to a polyamide composition comprising
(i) 50 to 78.88 wt.-%, based on the total weight of the polyamide composition, of at least one aliphatic polyamide or semi-aromatic polyamide or mixture thereof;
(ii) 20 to 50 wt.-%, based on the total weight of the polyamide composition, of circular glass fibres;
(iii) 1 to 20 wt.-%, based on the total weight of the polyamide composition, flat glass fibres;
(iv) 0.02 to 1 wt.-%, based on the total weight of the polyamide composition, of at least one black dye of the monoazo complex type;
(v) 0.1 to 5 wt.-%, based on the total weight of the polyamide composition, of one or more further additives.

The polyamide compositions of the invention are generally prepared by mixing in a twin-screw extruder or single-screw polyamide and different loads.

The polyamide composition is extruded as rods which are cut to form granules.

The polyamide composition preferably has a flexural strength at 23°C (according to ISO 178) of > 250 MPa, more preferably > 260 MPa (determined as described in the experimental section).

The polyamide composition preferably has a tensile strength DAM at 23°C (according to ISO 527-2/1A) of > 160 MPa, more preferably > 170 MPa (determined as described in the experimental section).

The polyamide composition preferably has a Charpy unnotched impact strength at 23°C (according to ISO 179/1eU) of > 30 kJ/m², more preferred > 40 kJ/m², and in particular > 40 kJ/m² (determined as described in the experimental section).

The polyamide composition preferably has a Charpy notched impact strength at 23°C (according to ISO 179/1eA) of > 8 kJ/m², in particular > 10 kJ/m² (determined as described in the experimental section).

The polyamide composition preferably has a heat deformation temperature at 1.82 mPa (according to ISO 75/Af) of > 230°C, in particular > 240°C (determined as described in the experimental section).

From the polyamide compositions of the invention, moulded articles are produced, preferably by an injection moulding process.

The molded resin products suitable for laser welding can be obtained by any methods including extrusion molding and injection molding. Laser welding only requires that the molded product made with transmitting resin for the laser utilized is in close contact with the molded product made with the absorptive resin for the laser utilized. If necessary, pressure can be further applied on the bonding surface.

Useful lasers to weld the molded resin products of the present invention may be any lasers having light emissions in the near infrared region. Particularly, lasers emitting light of wavelengths from 800-1200 nm are preferred, and diode lasers and YAG lasers are particularly preferred. Lasers may be utilized singly or in combination with each other, as will be appreciated among those having skill in the art of laser operation. The laser emissions may be continuous or pulsed, with continuous emissions being preferred.

With respect to the resin materials subject to the laser welding, there is provided one resin material that is laser-transmitting and another resin material that is laser-absorptive. By irradiating a laser light through the transmitting resin material onto the absorptive resin material attached thereto, the energy of the laser light accumulated on the contact surface of the absorptive resin material heats and melts the contact area. The transmitting resin material is also heated/melted through heat transfer, so that the resin materials are easily and strongly bonded together. The laser light may directly irradiate the welding area or may be guided to the contact area using an optical apparatus such as a mirror or optical fiber. These and other techniques are employed as appropriate to the individual welding operation, and are selected by those having skill in this field.

The intensity, density and irradiating area of the laser is selected to appropriately carry out the heating and melting of the bonding surface. These are adjusted in such as a way that the resulting bonding is obtained with the strength required for the application of interest. If it is too weak, a sufficient heating melting cannot be realized. Conversely if it is too strong, degradation of resin may be induced.

The instant invention pertains to the junction portion of two molded articles (being respectively laser-transmitting and absorbing) positioned in contact with each other, in which a predetermined amount of laser beam is focused and transmitted, is melted and bonded. If a multiple number of points, lines or surfaces are to be welded, the laser light may be moved in sequence to irradiate the bonding surface, or a multiple laser sources may be used to irradiate simultaneously.

Other advantages and details of the invention will become apparent from the examples given below for illustrative purposes only.

### EXAMPLES

### Preparation of the polyamide compositions:

As examples and comparative examples, several polyamide compositions were prepared.

The following components were used as starting materials:
Component (i): PA6.6 homopolymer
Component (ii): glass fibre chopped strands having an average length of 4.5 mm and an average diameter of 10 µm (T435R from Taishan)
Component (iii): flat glass fibers ECS301-HP-3-M3 having an aspect ratio of 4:1 available from Chongqing Polycomp International Corp.
Component (iv): monoazo complex dye Solvent Black 27
Component (v): heat stabilizer and mould release masterbatch (MM9549C from Solvay)

Compositions for moulding according to the invention were prepared by mixing in a twin-screw type extruder ZSK 18 W at a rate of 12 kg / h and a rotation speed of equal screw 300 rev / min, at a temperature in the range of from 265°C to 340°C, depending on the formulation of the various components and amounts as disclosed in Table 1 below.

Plaques of different sizes and thickness were produced by injection moulding.

The following properties were determined:

### Tensile Modulus, Tensile Strength and Tensile Elongation:

Tensile modulus and tensile strength were determined according to ISO 527-2/1A. Values are given in MPa. The tensile elongation was determined according to ISO 527-2/1A. Values are given in %.

### Flexural Modulus and Flexural strength:

Determination of flexural strength at maximum load was carried out according to ISO 178 with test samples having a size of 80 x 10 mm and a thickness of 4 mm. Values are given in MPa.

### Charpy unnotched impact strength:

Charpy unnotched impact strength was determined according to ISO 179/1eU with test samples having a size of 80 x 10 mm and a thickness of 4 mm. Values are given in kJ/m².

### Charpy notched impact strength:

Charpy notched impact strength was determined according to ISO 179/1eA with test samples having a size of 80 x 10 mm and a thickness of 4 mm. A 0.8 mm-wide U-shaped notch was made on the broad side of the specimens. The notch depth was 1/3 of the specimen thickness. The edges outlining the notch root had a curvation radius of < 0.1 mm. Values are given in kJ/m².

### Heat deformation temperature:

Heat deformation temperature was determined at 1.82 MPa according to ISO 75/Af. Values are given in °C.

### Laser Transmittance at 980 and 1064 nm:

Laser transmittance was determined by means of a UV-visible Spectrophotometer (Mettler Evolution 220) with test plaques of 60 x 60 mm size.

### Colour L*, a*, b* Values, 2 mm:

Colour L*, a*, b* values were determined by means of a Benchtop Spectrophotometer (model Ci7800 manufactures by X-rite^{®}, Inc.) in colour test mode using 90 x 60 x 2 mm flat specimens.

### Results of the tests:

The results of the tests for Examples E1 to E3 and Comparative Example C1 are summarized in Table 1.

| Formulation | | | | | | | | |
|---|---|---|---|---|---|---|---|---|
| RMS | Raw Material code | Unit | Supplier | C1 | E1 | E2 | E3 | E4 |
| Polyamide 6.6 | 26AE1 | % | Solvay | 69.5 | 69.5 | 69.5 | 69.5 | 69.5 |
| Heat stabilizer and Mold release master Batch | MM9549C | % | Solvay | 0.4 | 0.4 | 0.4 | 0.4 | 0.4 |
| C.I. Solvent Black 27 | Black H | % | Clariant | 0.1 | 0.1 | 0.1 | 0.1 | 0.1 |
| Standard Glass fibres | T435R | % | Taishan | 30 | 29 | 28 | 25 | 15 |
| Flat Glass fibres | ECS301HP-3-M3 | % | CPIC | | 1 | 2 | 5 | 15 |
| Sum | | % | | 100 | 100 | 100 | 100 | 100 |
| Properties | | Unit | Standard | | | | | |
| Tens Moduls | | MPa | ISO 527-2/1A | 12670 | 10325 | 10174 | 10268 | 10278 |
| Tens Strength | | MPa | ISO 527-2/1A | 199.8 | 196 | 189 | 189 | 190 |
| Tens Elongation | | % | ISO 527-2/1A | 3.43 | 3.5 | 3.5 | 3.5 | 3.2 |
| Flex Modulus | | MPa | ISO 178 | 8990 | 8886 | 8805 | 8740 | 8714 |
| Flex Strength | | MPa | ISO 178 | 285.5 | 294 | 283 | 282 | 278 |
| Charpy Unnotched Impact | | KJ/m² | ISO 179/1eU | 12 | 12 | 12 | 12 | 13 |
| Charpy Notched Impact | | KJ/m² | ISO 179/1eA | 65 | 88 | 83 | 78 | 75 |
| Heat Deformation Temperature 1.82 MPa | | °C | ISO 75/Af | 243 | 247 | 247 | 246 | 247 |
| Laser Transmittance at 980 mn, 1.2 mm plaque | | % | | 72.7 | 73.9 | 74.7 | 75.8 | 75.9 |
| Laser Transmittance at 980 mn, 2 mm plaque | | % | | 46.9 | 53.4 | 52.3 | 53.7 | 54.3 |
| Laser Transmittance at 980 mn, 3.2 mm plaque | | % | | 31.1 | 37 | 34.9 | 37.8 | 40.9 |
| Laser Transmittance at 1064 mn, 1.2 mm plaque | | % | | 74.8 | 75.8 | 76.5 | 77.6 | 77.5 |
| Laser Transmittance at 1064 mn, 2 mm plaque | | % | | 49.8 | 56.1 | 55.2 | 56.5 | 57.2 |
| Laser Transmittance at 1064 mn, 3.2 mm plaque | | % | | 33.9 | 40 | 37.6 | 40.8 | 44.2 |
| Colour L* Value, 2 mm | | | | 28.88 | 27.8 | 28.32 | 27.83 | 28.78 |
| Colour a* Value, 2 mm | | | | 0.95 | 0.56 | 0.47 | 0.54 | 0.36 |
| Colour b* Value, 2 mm | | | | -6.68 | -4.5 | -4.74 | -4.34 | -5.09 |

Table 1 shows a synergistic effect achieved by the use of standard glass fibers together with flat glass fibres. At a total amount of 30 wt.-% glass fibres, substituting 1 wt.-%, 2 wt.-%, 5 wt.-%, respectively, of standard glass fibers with flat glass fibres, significantly improves the laser transmittance of the polyamide plaques at 980 nm and 1064 nm. The effect is most pronounced with the 3.2 mm plaques. Concurrently, a good level of mechanical properties is maintained.

## Claims

1. Polyamide composition, comprising
(i) 50 to 78.88 wt.-%, based on the total weight of the polyamide composition, of at least one aliphatic polyamide or semi-aromatic polyamide or mixture thereof;
(ii) 20 to 50 wt.-%, based on the total weight of the polyamide composition, of circular glass fibres,
(iii) 1 to 20 wt.-%, based on the total weight of the polyamide composition, of flat glass fibres;
(iv) 0.02 to 1 wt.-%, based on the total weight of the polyamide composition, of at least one black dye of the monoazo complex type;
(v) 0.1 to 5 wt.-%, based on the total weight of the polyamide composition, of one or more further additives.

2. Polyamide composition according to claim 1, wherein the at least one aliphatic polyamide is selected from homopolymers of hexamethylenediamine and adipic acid (PA6.6), homopolymers of ε-caprolactam (PA6), copolymers of hexamethylenediamine, adipic acid and ε-caprolactam (PA6.6/6), homopolymers of hexamethylenediamine and sebacic acid (PA6.10) and mixtures of these aliphatic polyamides.

3. Polyamide composition according to claim 1 or 2, wherein the semi-aromatic polyamide is selected from homopolymers and/or copolymers of hexamethylenediamine and adipic acid with terephthalic acid and/or isophthalic acid.

4. Polyamide composition according to claim 3, wherein the at least one semi-aromatic polyamide is selected from copolymers of hexamethylenediamine, adipic acid and terephthalic acid (PA6.6/6.T), copolymers of hexamethylenediamine, adipic acid and isophthalic acid (PA6.6/6.I), copolymers of hexamethylenediamine, terephthalic acid and isophthalic acid (PA6.T/6.I), copolymers of hexamethylenediamine, adipic acid, terephthalic acid and isophthalic acid (PA6.6/6.T/6.I) and mixtures of these semi-aromatic polyamides.

5. Polyamide composition according to any one of claims 1 to 4, wherein the black dye of the monoazo complex type is C.I. Solvent Black 27.

6. Polyamide composition according to any of claims 1 to 5, wherein the at least one additive is selected from colorants, mould release agents, flame retardants, toughening modifiers, and additives to facilitate the mixing of the components or the moulding of the composition.

7. A molded part obtained from the polyamide composition according to any one of claims 1 to 6.

## Patentansprüche

1. Polyamidzusammensetzung, umfassend
(i) 50 bis 78,88 Gew.-%, bezogen auf das Gesamtgewicht der Polyamidzusammensetzung, mindestens eines aliphatischen Polyamids oder teilaromatischen Polyamids oder einer Mischung davon;
(ii) 20 bis 50 Gew.-%, bezogen auf das Gesamtgewicht der Polyamidzusammensetzung, runde Glasfasern,
(iii) 1 bis 20 Gew.-%, bezogen auf das Gesamtgewicht der Polyamidzusammensetzung, flache Glasfasern;
(iv) 0,02 bis 1 Gew.-%, bezogen auf das Gesamtgewicht der Polyamidzusammensetzung, mindestens eines schwarzen Farbstoff vom Monoazokomplextyp;
(v) 0,1 bis 5 Gew.-%, bezogen auf das Gesamtgewicht der Polyamidzusammensetzung, eines oder mehrerer weiterer Additive.

2. Polyamidzusammensetzung nach Anspruch 1, wobei das mindestens eine aliphatischen Polyamids aus Homopolymeren von Hexamethylendiamin und Adipinsäure (PA6.6), Homopolymeren von ε-Caprolactam (PA6), Copolymeren von Hexamethylendiamin, Adipinsäure und ε-Caprolactam (PA6.6/6), Homopolymeren von Hexamethylendiamin und Sebacinsäure (PA6.10) und Mischungen dieser aliphatischen Polyamide ausgewählt ist.

3. Polyamidzusammensetzung nach Anspruch 1 oder 2, wobei das teilaromatische Polyamid aus Homopolymeren und/oder Copolymeren von Hexamethylendiamin und Adipinsäure mit Terephthalsäure und/oder Isophthalsäure ausgewählt ist.

4. Polyamidzusammensetzung nach Anspruch 3, wobei das mindestens eine teilaromatische Polyamid aus Copolymeren von Hexamethylendiamin, Adipinsäure und Terephthalsäure (PA6.6/6.T), Copolymeren von Hexamethylendiamin, Adipinsäure und Isophthalsäure (PA6.6/6.I), Copolymeren von Hexamethylendiamin, Terephthalsäure und Isophthalsäure (PA6.T/6.I), Copolymeren von Hexamethylendiamin, Adipinsäure, Terephthalsäure und Isophthalsäure (PA6.6/6.T/6.I) und Mischungen dieser teilaromatischen Polyamide ausgewählt ist.

5. Polyamidzusammensetzung nach einem der Ansprüche 1 bis 4, wobei es sich bei dem schwarzen Farbstoff vom Monoazokomplextyp um C.I. Solvent Black 27 handelt.

6. Polyamidzusammensetzung nach einem der Ansprüche 1 bis 5, wobei das mindestens eine Additiv aus Farbmitteln, Formtrennmitteln, Flammschutzmitteln, Zähigkeitsvermittlern und Additiven zur Erleichterung des Mischens der Komponenten oder des Formens der Zusammensetzung ausgewählt ist.

7. Formteil, erhalten aus der Polyamidzusammensetzung nach einem der Ansprüche 1 bis 6.

## Revendications

1. Composition de polyamide, comprenant
(i) 50 à 78,88 % en poids, sur la base du poids total de la composition de polyamide, d'au moins un polyamide aliphatique ou polyamide semi-aromatique ou un mélange correspondant ;
(ii) 20 à 50 % en poids, sur la base du poids total de la composition de polyamide, de fibres de verre circulaires,
(iii) 1 à 20 % en poids, sur la base du poids total de la composition de polyamide, de fibres de verre plates ;
(iv) 0,02 à 1 % en poids, sur la base du poids total de la composition de polyamide, d'au moins un colorant noir du type complexe monoazo ;
(v) 0,1 à 5 % en poids, sur la base du poids total de la composition de polyamide, d'un ou plusieurs additifs supplémentaires.

2. Composition de polyamide selon la revendication 1, l'au moins un polyamide aliphatique étant choisi parmi des homopolymères d'hexaméthylènediamine et d'acide adipique (PA6.6), des homopolymères d'ε-caprolactame (PA6), des copolymères d'hexaméthylènediamine, d'acide adipique et d'ε-caprolactame (PA6.6/6), des homopolymères d'hexaméthylènediamine et d'acide sébacique (PA6.10) et des mélanges de ces polyamides aliphatiques.

3. Composition de polyamide selon la revendication 1 ou 2, le polyamide semi-aromatique étant choisi parmi des homopolymères et/ou copolymères d'hexaméthylènediamine et d'acide adipique avec de l'acide téréphtalique et/ou de l'acide isophtalique.

4. Composition de polyamide selon la revendication 3, l'au moins un polyamide semi-aromatique étant choisi parmi des copolymères d'hexaméthylènediamine, d'acide adipique et d'acide téréphtalique (PA6.6/6.T), des copolymères d'hexaméthylènediamine, d'acide adipique et d'acide isophtalique (PA6.6/6.I), des copolymères d'hexaméthylènediamine, d'acide téréphtalique et d'acide isophtalique (PA6.T/6.I), des copolymères d'hexaméthylènediamine, d'acide adipique, d'acide téréphtalique et d'acide isophtalique (PA6.6/6.T/6.I) et les mélanges de ces polyamides semi-aromatiques.

5. Composition de polyamide selon l'une quelconque des revendications 1 à 4, le colorant noir du type complexe monoazo étant C.I. Solvent Black 27.

6. Composition de polyamide selon l'une quelconque des revendications 1 à 5, l'au moins un additif étant choisi parmi des matières colorantes, des agents de démoulage, des agents ignifuges, des agents de modification de la ténacité, et des additifs pour faciliter le mélange des composants ou le moulage de la composition.

7. Pièce moulée obtenue à partir de la composition de polyamide selon l'une quelconque des revendications 1 à 6.
